# FASCICULE DE BREVET EUROPEEN

(11) **EP 3 638 917 B1**
(45) Date de publication et mention de la délivrance du brevet: **07.04.2021**
(21) Numéro de dépôt: 17739626.4
(22) Date de dépôt: 15.06.2017
(51) Int. Cl.: F16D 55/28, F16D 59/02

(54) **DISPOSITIF DE FREINAGE D'UN ARBRE ROTATIF**
VORRICHTUNG ZUM BREMSEN EINER DREHWELLE
DEVICE FOR BRAKING A ROTARY SHAFT

(43) Date de publication de la demande: 22.04.2020
(73) Titulaire: Warner Electric Europe SAS, 49124 St-Barthélémy d'Anjou (FR)
(72) Inventeur: COUTURIER, Eric, 49240 Avrill (FR); ROUSSEAU, Kévin, 49100 Angers (FR); JOUSSEAUME, Sylvain, 49124 Saint Barthélémy d'Anjou (FR)
(74) Mandataire: Santarelli
(86) Numéro de dépôt international: PCT/FR2017/051556
(87) Numéro de publication internationale: WO 2018/229359

(56) Documents cités:
- CN-B- 103 066 793
- DE-U1- 29 820 822
- JP-A- 2001 124 116
- JP-A- 2002 372 078
- US-A1- 2015 292 580

## Description

La présente invention concerne un dispositif de freinage pour bloquer un arbre rotatif. Le dispositif de freinage comprend au moins une unité d'actionnement, un carter de support, et un disque de frein solidaire en rotation de l'arbre rotatif. L'unité d'actionnement, qui peut être du type électromagnétique, hydraulique ou pneumatique, est logée dans un boîtier et peut être commandée pour déplacer axialement une plaque de pression sur le disque de frein et le presser contre une partie correspondante du carter du support, afin de freiner ce disque et, par conséquent, bloquer en rotation l'arbre rotatif. De tels dispositifs de freinage sont notamment mis en œuvre dans les ascenseurs, les chariots élévateurs, et plus généralement dans tout type de dispositif nécessitant des arrêts prolongés sécurisés.

Dans l'art antérieur, il existe déjà depuis longtemps des systèmes de déverrouillage manuel pour déplacer axialement la plaque de pression en éloignement du disque de friction en l'absence d'activation de l'unité d'actionnement (voir par exemple le document JP 2002 372078 A). Selon un mode de réalisation, ce système de déverrouillage manuel peut comprendre deux pivots solidaires qui sont respectivement solidaires de deux éléments du dispositif de freinage d'un arbre rotatif qui sont mobiles l'un par rapport à l'autre, dont au moins la plaque de pression : un pivot est monté sur la plaque de pression et l'autre pivot peut être monté sur le boîtier. Le système de déverrouillage manuel comprend également un pivot libre relié aux deux pivots solidaires par deux biellettes, à savoir une biellette menante sollicitée en déplacement pivotant par un levier d'actionnement manuel comprenant un organe de préhension manuelle, et une biellette menée qui est entraînée en déplacement pivotant par la biellette menante.

La présente invention a pour but d'améliorer ce système de déverrouillage manuel de dispositif de freinage en veillant tout particulièrement à diminuer la force nécessaire pour actionner le levier d'actionnement manuel. Un autre but de l'invention est d'éviter le débattement du levier d'actionnement manuel en cours du fonctionnement normal du dispositif de freinage d'un arbre rotatif, car il pourrait engendrer des accidents corporels aux opérateurs qui interviennent sur les appareils équipés de ce type de dispositif de freinage d'un arbre rotatif.

Pour ce faire, la présente invention propose un dispositif de freinage d'un arbre rotatif comprenant au moins une unité d'actionnement, une plaque de pression, un disque de friction et un carter support, la plaque de pression étant sollicitée, au repos contre le disque de friction et, lorsque l'unité d'actionnement est activée, la plaque de pression est déplacée vers l'unité d'actionnement, le dispositif de freinage définissant un axe de symétrie X, le dispositif de freinage d'un arbre rotatif comprenant également un système de déverrouillage manuel pour déplacer axialement la plaque de pression en éloignement du disque de friction en l'absence d'activation de l'unité d'actionnement, ce système de déverrouillage manuel comprenant deux pivots solidaires, le système de déverrouillage manuel comprenant également un pivot libre relié aux deux pivots solidaires par deux biellettes, une des deux biellettes dite biellette menante étant sollicitée en déplacement pivotant par un levier d'actionnement manuel comprenant un organe de préhension manuelle, l'autre biellette dite biellette menée étant entraînée en déplacement pivotant par la biellette menante,
a- le système de déverrouillage manuel agissant sur la plaque de pression de manière équilibrée et centrée sur l'axe de symétrie X caractérisé en ce que les deux pivots solidaires sont respectivement solidaires de deux éléments du dispositif de freinage qui sont mobiles l'un par rapport à l'autre dont au moins la plaque de pression et en ce que,
b- l'angle α formé par les trois pivots au niveau du pivot placé entre les deux autres est supérieur à 120°, avantageusement supérieur à 150°, et de préférence supérieur à 165°,
c- le déplacement pivotant du levier d'actionnement manuel, à partir de la position de repos, tend à aligner les trois pivots en augmentant l'angle α qui tend à devenir plat.

La caractéristique a- (action équilibrée et centrée) permet de réduire les forces de frottement qui augmente la dureté à l'actionnement. La caractéristique b- (angle très ouvert) permet d'augmenter l'effet de levier, d'où une diminution de l'effort nécessaire pour l'actionnement. La caractéristique c- (angle α proche du plat) amplifie encore davantage l'effet de levier. En somme, la combinaison de ces trois caractéristiques permet d'obtenir un actionnement aisé et efficace du système de déverrouillage manuel.

Selon un aspect très intéressant de l'invention, le levier d'actionnement manuel peut être raccordé de manière amovible à la biellette menante. En variante, le levier d'actionnement manuel peut être solidaire de la biellette menante, les deux biellettes étant en prise amovible avec les deux pivots solidaires. En d'autres termes, le système de déverrouillage manuel peut être entièrement amovible, à l'exception des deux pivots solidaires. Selon une autre variante, le levier d'actionnement manuel peut être monté à demeure sur le dispositif de freinage en pivotant autour d'un axe, le levier d'actionnement manuel sollicitant la biellette menante par formation d'un contact d'appui, avantageusement à l'encontre d'un ressort de rappel qui ramène le levier d'actionnement manuel vers une position de repos hors de contact de la biellette menante. Selon encore une autre variante, une des biellettes est en prise avec un pivot solidaire au moyen d'un logement de pivot oblong permettant un déplacement du pivot solidaire dans le logement de pivot sans solliciter la biellette en déplacement. Ainsi, le levier d'actionnement manuel et la biellette menante peuvent être réalisés de manière monobloc ou sous la forme de deux pièces séparées que l'on peut raccorder, accoupler, assembler, etc., de manière à transmettre la force de pivotement du levier d'actionnement manuel à la biellette menante. Les biellettes peuvent être fixement solidaires des pivots solidaires, être raccordées au moyen d'un logement oblong ou encore engagées de manière amovible. Le levier d'actionnement manuel peut aussi être découplé de la biellette menante qui peut ainsi se déplacer, lors du fonctionnement normal du frein, sans agir sur le levier d'actionnement manuel. Toutes ces possibilités permettent de neutraliser le levier d'actionnement manuel, lors du fonctionnement normal du frein, de manière à éliminer tout risque d'accident corporel et/ou de déblocage intempestif.

Avantageusement, le système de déverrouillage manuel peut comprendre une butée instable pour une biellette lors de son pivotement, limitant ainsi l'angle α à une valeur maximale, la butée instable étant avantageusement formée par un pivot solidaire. En d'autres termes, l'opérateur va actionner le système de déverrouillage manuel par l'intermédiaire du levier d'actionnement manuel jusqu'à venir dans une position finale de butée instable, de sorte que dès qu'il va relâcher son action sur le levier d'actionnement manuel, celui-ci va revenir automatiquement vers sa position de repos ou de départ. Le levier d'actionnement manuel ne va pas rester dans la position de butée.

En variante, le système de déverrouillage manuel peut comprendre une butée stable pour une biellette lors de son pivotement, limitant ainsi l'angle α à une valeur minimale au-delà du passage à 180°, la butée en pivotement étant avantageusement formée par un pivot solidaire. En d'autres termes, l'opérateur va actionner le système de déverrouillage manuel par l'intermédiaire du levier d'actionnement manuel jusqu'à dépasser une position d'équilibre instable correspondant à une valeur de 180° de l'angle a. Au-delà de cette position d'équilibre instable, le levier d'actionnement manuel va se déplacer automatiquement vers la position finale de butée stable, de sorte que l'opérateur peut relâcher son action sur le levier d'actionnement manuel dès qu'il dépasse position d'équilibre instable et assister simplement le déplacement du levier d'actionnement manuel vers sa position finale de butée stable. Le levier d'actionnement manuel va rester dans cette position de butée stable.

Selon une mise œuvre symétrique, le système de déverrouillage manuel peut comprendre deux ensembles comprenant chacun deux pivots solidaires et un pivot libre, les ensembles étant disposés de manière symétrique par rapport à l'axe de symétrie X, le levier d'actionnement manuel comprenant un étrier s'étendant respectivement jusqu'aux deux ensembles et une tige de préhension fixée à l'étrier. Selon une mise en œuvre axiale, le système de déverrouillage manuel ne comprend qu'un seul ensemble comprenant deux pivots solidaires et un pivot libre montés sensiblement sur l'axe de symétrie du frein.

Selon un autre aspect intéressant de l'invention, le pivot libre peut être sensiblement équidistant des deux pivots solidaires, les deux pivots solidaires étant éloignés, au repos, d'une distance D, le pivot libre étant alors distant de la ligne passant par les deux pivots solidaires d'une distance minimale d qui est inférieure D/2, avantageusement inférieure à D/4 et de préférence inférieure à D/10.

Selon un mode de réalisation pratique avantageux, la biellette menée comprend deux bras de biellette, la biellette menante étant disposée entre les deux bras de biellette.

Selon une application avantageuse, l'unité d'actionnement est de type électromagnétique comprenant un bobinage monté dans un boîtier de l'unité d'actionnement et pouvant déplacer axialement la plaque de pression pour libérer le disque de friction. En variante, l'unité d'actionnement peut être du type à commande pneumatique ou hydraulique.

Selon un autre aspect avantageux, la plaque de pression est pressée contre le disque de friction par au moins un ressort de compression monté précontraint dans un boîtier de l'unité d'actionnement.

L'esprit de l'invention réside dans le fait de combiner une action centrée/équilibrée et un effet de levier amplifié pour obtenir un fonctionnement aisé avec force d'actionnement très réduite. Le caractère amovible du levier et/ou des biellettes est un aspect supplémentaire intéressant qui permet de sécuriser le fonctionnement du frein et participe à l'ergonomie globale avec le fonctionnement aisé.

L'invention sera maintenant décrite plus en détail en référence aux dessins joints, donnant à titre d'exemples non limitatifs, plusieurs modes de réalisation de l'invention.

Sur les figures :
La figure 1 est une vue très schématique en coupe transversale verticale à travers un dispositif de freinage d'un arbre rotatif conventionnel, respectivement en position desserrée (partie haute de la figure) et en position serrée (partie basse de la figure),
Les figures 2a, 2b, 2c et 2d représentent le dispositif de freinage d'un arbre rotatif de la figure 1 (avec le carter de support retiré) équipé d'un système de déverrouillage manuel selon une première forme de réalisation de la présente invention,
Les figures 3a et 3b représentent un dispositif de freinage d'un arbre rotatif double équipé d'un système de déverrouillage manuel selon un deuxième mode de réalisation de la présente invention,
Les figures 4a et 4b représentent un dispositif de freinage d'un arbre rotatif équipé d'un système de déverrouillage manuel selon un troisième mode de réalisation de l'invention,
La figure 5 représente un dispositif de freinage d'un arbre rotatif double équipé d'un système de déverrouillage manuel selon un quatrième mode de réalisation de la présente invention,
La figure 6 représente un dispositif de freinage d'un arbre rotatif double équipé d'un système de déverrouillage manuel selon un cinquième mode de réalisation de la présente invention, et
La figure 7 représente un dispositif de freinage d'un arbre rotatif double équipé d'un système de déverrouillage manuel selon un sixième mode de réalisation de la présente invention.

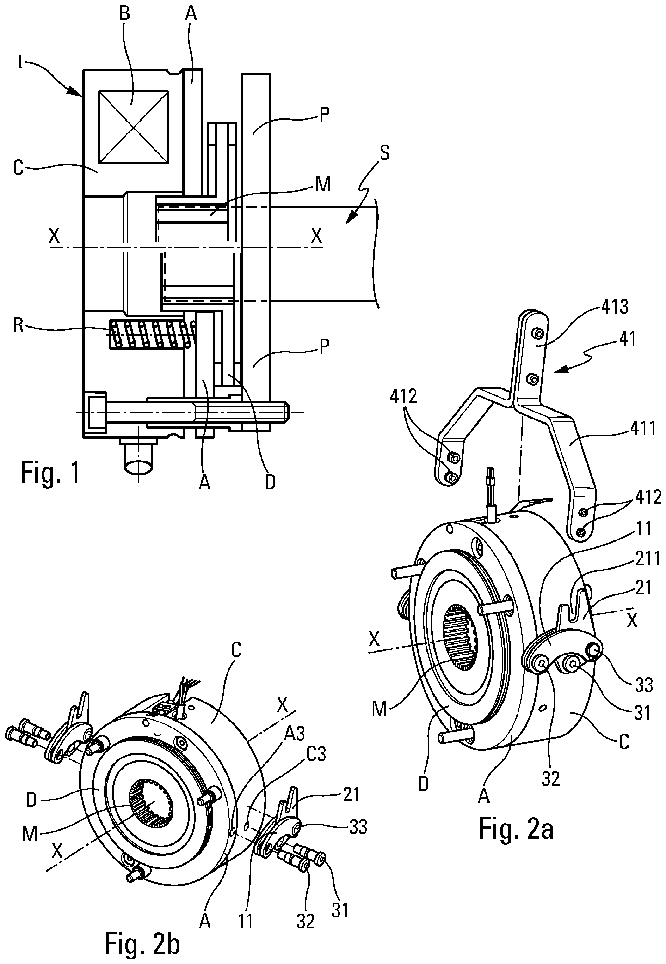

On se référera tout d'abord à la figure 1 pour expliquer de manière très générale la structure et le fonctionnement d'un dispositif de freinage électromagnétique classique ou conventionnel pour un arbre rotatif S. D'autres dispositifs de freinage hydrauliques ou pneumatiques sont aussi concernés par ce brevet mais ne sont pas représentés. Il comprend tout d'abord une unité d'actionnement (ou inducteur) I qui se présente généralement (mais pas exclusivement) sous la forme d'un boîtier annulaire (cylindre) ou rectangulaire (parallélépipédique) C définissant au moins un logement annulaire (ou elliptique), dans lequel est reçu au moins un bobinage (ou bobine d'inducteur) B de fil conducteur. Ce boîtier C, qui est parfois désigné sous le terme de « coquille », comprend également un ou plusieurs alésages borgnes, qui peuvent recevoir chacun un ou plusieurs ressorts de compression R, qui peuvent être des ressorts à boudin classiques ou des rondelles ressort ou tout autre système de poussée mécanique. Ces ressorts sont avantageusement montés en étant précontraints. Le dispositif de freinage d'un arbre rotatif comprend également une plaque de pression mobile A, qui est disposée contre les ressorts R en face du bobinage B. Cette plaque de pression mobile A, qui est parfois désignée sous le terme de « armature mobile », est réalisée en un matériau magnétique. Le frein peut comprendre également un moyeu M qui traverse la plaque de pression mobile A, et même une partie du boîtier C. Ce moyeu M est destiné à recevoir un arbre rotatif S entraîné par un moteur (non représenté). Le frein comprend aussi un disque de frein D qui peut être disposé autour du moyeu M de manière adjacente à la plaque de pression mobile A. Le disque de frein peut aussi être disposé directement autour d'un arbre entraîné par un moteur. Le disque de frein D peut présenter une surface de friction sur ses deux faces. Enfin, le frein comprend un carter de support P qui s'étend parallèlement à la plaque de pression mobile A, avec le disque de frein D disposé entre eux. Ce carter de support P, qui est parfois désigné sous le terme de « plaque de friction », est monté fixement par rapport au boîtier C, par exemple à l'aide de boulons. Telle est la structure générale d'un dispositif de freinage d'un arbre rotatif classique, qui peut équiper un ascenseur, un chariot élévateur, etc. Un tel frein présente une symétrie autour d'un axe central X.

En se référant à la partie haute de la figure 1, on peut voir que la plaque de pression mobile A est plaquée contre le boîtier C en comprimant les ressorts R, en raison de l'activation de la bobine B en courant. En effet, de manière connue, le bobinage B va créer un champ magnétique qui va attirer la plaque de pression mobile A en matériau magnétique. L'écart entre la plaque de pression mobile A et le carter de support P est alors maximal, et le disque de friction est hors de contact à la fois de la plaque de pression A et du carter de support P. Le dispositif de freinage d'un arbre rotatif est alors inopérant et le moyeu M peut tourner librement.

En se référant à la partie basse de la figure 1, on peut voir que la plaque de pression mobile A a été déplacée vers le carter de support P sous l'action des ressorts R. En effet, cette situation correspond à la coupure de l'activation électrique du bobinage B, de sorte qu'il n'y a plus de forces électromagnétiques attirant la plaque de pression A contre le boîtier C. Les ressorts R agissent alors pleinement sur la plaque de pression mobile A qui est poussée vers le carter de support P en prenant en sandwich entre eux le disque de friction D. On peut également dire que le disque de fiction D est coincé fortement entre la plaque de pression mobile A et le carter de support P. Le moyeu M qui est solidaire du disque de friction D est alors bloqué en rotation. Le dispositif de freinage d'un arbre rotatif est alors pleinement actif, bien que son activation en courant soit coupée. En d'autres termes, ce dispositif de freinage d'un arbre rotatif est inactif lorsqu'alimenté et actif au repos.

La figure 1 représente un dispositif de freinage d'un arbre rotatif simple, mais il existe également des freins électromagnétiques double, mettant en œuvre deux unité d'actionnements I, deux plaques de pressions mobiles A et deux disques de frein D. Le principe de fonctionnement reste toutefois le même avec une plaque de pression mobile A qui est sollicitée en déplacement axial soit par un bobinage B soit par des ressorts R pour serrer ou desserrer le disque de frein D.

Les figures 2a à 2d représentent un dispositif de freinage d'un arbre rotatif simple, comparable ou identique à celui de la figure 1, avec toutefois le carter de support P retiré, de sorte que l'on voit le disque de frein D et le moyeu M. Ce dispositif de freinage d'un arbre rotatif simple est équipé d'un système de déverrouillage manuel qui comprend trois entités distinctes, à savoir deux ensembles latéraux montés de manière symétrique par rapport à l'axe X et de manière diamétralement opposée sur la périphérie externe du frein, et un levier d'actionnement manuel 41 qui est adapté à venir en prise avec les deux ensembles latéraux pour les actionner.

Tout d'abord, la plaque de pression mobile A peut être préparée dans un mode de réalisation avantageux avec deux alésages A3 qui s'étendent de manière radiale et diamétralement opposée. Il en est de même pour le boîtier C qui est réalisé avec deux autres alésages C3. On peut remarquer sur la figure 2b qu'une paire d'alésages A3, C3 est sensiblement alignée par rapport à l'axe X. Ces quatre alésages A3, C3 reçoivent quatre pivots solidaires 31, 32, à savoir deux pivots solidaires 31 dans les alésages C3 du boîtier C et deux autres pivots solidaires 32 dans les deux alésages A3 de la plaque de pression mobile A. Ces pivots solidaires 31, 32 sont de préférence fixés à demeure dans leurs alésages respectifs A3, C3. En variante, ils peuvent être amovibles.

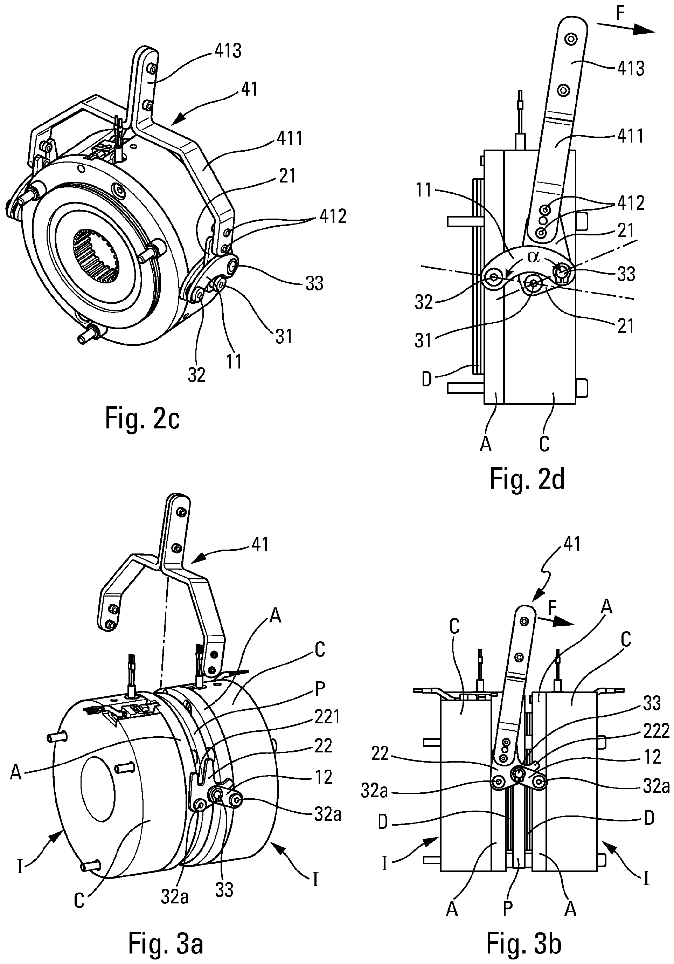

Chaque ensemble latéral comprend également deux biellettes 11, 21 qui sont reliées entre elles par un pivot libre 33, qui constitue ainsi un axe de pivotement d'une biellette par rapport à l'autre. Chaque biellette 11, 21 comprend également un œil de fixation à travers lequel passe un pivot solidaire 31, 32. Comme on peut le voir sur la figure 2a, le pivot solidaire 31 passe à travers la biellette 21 pour être reçue dans l'alésage C3, alors que l'autre pivot solidaire 32 passe à travers la biellette 11 pour être reçue fixement dans l'alésage A3 de la plaque de pression A. Ainsi, le pivot solidaire 31 est relié au pivot solidaire 32 par l'intermédiaire des deux biellettes 11 et 21 reliées entre elles par le pivot libre 33. Plus en détails, on peut remarquer que la biellette 11, dite biellette menée, comprend deux bras de biellettes identiques entre lesquelles est disposée la biellette 21, dite biellette menante. En d'autres termes, la biellette menante 21 s'étend à l'intérieur de la biellette menée 11. On peut également remarquer que cette biellette menée 11 présente une configuration courbe, un peu en forme de haricot, avec le pivot fixe 32 à une extrémité et le pivot libre 33 à l'autre extrémité. Ainsi, comme on peut plus clairement le voir sur la figure 2d, le pivot fixe 31 de la biellette menante 21 est disposé sensiblement entre le pivot fixe 32 et le pivot mobile 33, sous le bord latéral incurvé convexe de la biellette 11. On peut ainsi remarquer que l'angle α formé par les trois pivots au niveau du pivot 31 est largement ouvert, de l'ordre de 150°. D'autre part, on peut voir que la biellette menante 21 forme une échancrure de raccordement 211 qui est ouverte vers le haut. Cette échancrure 211 s'étend au-dessus de la biellette menée 11, sensiblement à la verticale du pivot solidaire 31. Cette représentation n'est qu'une des réalisations possibles des biellettes. De nombreuses formes de biellettes sont envisageables sans pour autant sortir du cadre de la présente invention, bien que toutes les formes ne soient pas illustrées sur les figures.

Ainsi, un ensemble latéral comprenant trois pivots et deux biellettes est monté de chaque côté du frein à la fois sur le boîtier C et sur la plaque de pression A, de manière parfaitement symétrique et diamétralement opposée.

Le levier d'actionnement manuel 41 comprend un étrier 411 dont, suivant un mode de réalisation avantageux mais non exhaustif, chaque extrémité libre est pourvue de deux broches 412 adaptées à s'engager respectivement à l'intérieur des échancrures de raccordement 211. Le levier 41 comprend également un organe de préhension manuel 413 par lequel l'opérateur saisit le levier 41 pour l'actionner. On comprend aisément que le levier d'actionnement manuel 41 est amovible, puisqu'il n'est pas fixé à demeure sur les deux ensembles latéraux. Au contraire, il peut aisément être raccordé et retiré des biellettes menantes 21 par simple engagement ou désengagement des deux paires de broches 41 dans ou hors des échancrures de raccordement 211. Une fois en place, comme représenté sur les figures 2c et 2d, il suffit à l'opérateur de pousser ou de tirer sur l'organe de préhension manuel 41 dans le sens de la flèche F (figure 2d), pour faire pivoter la biellette menante 21 vers la droite autour du pivot solidaire 31. Cela occasionne le déplacement en rotation du pivot libre 33 qui va faire pivoter la biellette menée 11 autour du pivot solidaire 32. Ceci a pour effet de ramener le pivot libre 33 dans l'alignement des deux pivots solidaires 31 et 32, augmentant ainsi l'angle α qui tend vers l'angle plat (180°). Le pivotement de la biellette menée 11 a pour effet de tirer la plaque de pression mobile A vers le boîtier C, desserrant ainsi la prise par friction sur le disque de friction D. En pratique, il suffit de déplacer la plaque de pression mobile A de quelques dixièmes de millimètres pour desserrer son emprise sur le disque de friction D. La position maximale du levier 41 peut par exemple être atteinte lorsque la plaque de pression A vient en butée contre le boîtier C. On peut également prévoir une butée qui est réalisée par le système de déverrouillage manuel. Par exemple, cette butée peut être formée par le pivot solidaire 31 contre lequel la biellette menée 11 vient en butée lors de son déplacement. Au vu de la figure 2d, on comprend aisément que la position finale du levier 41 est rapidement atteinte, étant donné que l'écart entre le pivot solidaire 31 et la biellette menée 11 est faible. Cette butée va constituer une butée instable, étant donné que le levier 41 va revenir automatiquement vers sa position de repos, dès lors que l'opérateur aura cessé de le solliciter dans le sens de la flèche F. En variante non représentée, il est également possible de créer une butée stable en passant par un équilibre instable correspondant à un angle α de 180°. Passé cet équilibre instable, le levier 41 peut alors se déplacer vers une butée stable, qui peut également être formée par le pivot solidaire 31, néanmoins avec un positionnement différent. En somme, il est possible de réaliser une butée stable ou instable en fonction du positionnement relatif des trois pivots 31, 32 et 33.

On comprend aisément à la vue des figures que le système de déverrouillage manuel agit de manière parfaitement équilibrée et centrée par rapport à l'axe X, étant donné que les deux ensembles latéraux sont disposés de manière symétrique et diamétralement opposée. D'autre part, le levier d'actionnement manuel 41 agit de manière totalement symétrique et équilibrée sur les deux ensembles latéraux à la fois. Il faut aussi noter que l'angle a, en position de repos du système de déverrouillage, est relativement important, et de toute façon supérieur à 120°. Cela implique que la force nécessaire pour actionner le levier 41 est réduite. La force d'actionnement est d'autant plus réduite que l'angle α au repos est proche 180°. Il faut toutefois préserver un angle de débattement permettant de déplacer la plaque de pression A par rapport au boîtier C. Globalement, un angle α au repos de l'ordre de 120 à 170° est envisageable. On peut aussi remarquer que la distance ℓ séparant le pivot fixe 33 de la ligne passant par les deux autres pivots solidaires 31 et 32 est bien inférieure à la distance L séparant les deux pivots solidaires 31. Cette distance l est inférieure à la moitié de la distance L, et peut même atteindre 1/10^{ème} de la distance L.

Les figures 3a et 3b représentent un dispositif de freinage d'un arbre rotatif double, comprenant deux unités d'actionnement I, deux plaques de pressions mobiles A, deux disques de frein D et un plateau de frein central P. Cette configuration de frein correspond sensiblement au dédoublement du dispositif de freinage d'un arbre rotatif classique des figures précédentes par symétrie miroir passant à travers le carter de support P. Ainsi, les deux plaques de pression mobiles A se déplacent l'une vers l'autre pour serrer les deux disques de frein D et s'éloignent l'une de l'autre pour les libérer.

Le système de déverrouillage manuel selon ce second mode de réalisation de l'invention comprend une biellette menée 12 et une biellette menante 22 qui sont reliées l'une à l'autre par un pivot libre 33. D'autre part, chaque biellette 12, 22 est montée sur une des plaques de pression mobiles A par deux pivots solidaires 32a. La biellette menante 22 comprend une échancrure 221 qui est sensiblement identique à celle du premier mode de réalisation des figures 2a à 2d. Le levier d'actionnement manuel 41 peut être strictement identique à celui du premier mode de réalisation des figures 2a à 2d. En se référant à la figure 3b, on peut remarquer que la biellette menée 12 est courte puisqu'elle ne s'étend que de la plaque de pression mobile A de droite au carter de support central P. Ainsi, le pivot libre 33 est situé à mi-distance des deux pivots solidaires 32a en formant un angle α qui est largement ouvert, c'est-à-dire de l'ordre de 130 à 140°. On peut également dire que la distance l séparant le pivot libre de la droite passant par les deux pivots solidaires 32a est de l'ordre du quart de la distance L séparant ces deux pivots 32a.

En actionnant le levier 41 dans le sens de la flèche F sur la figure 3b, le pivot libre 33 a tendance à se rapprocher de la ligne passant par les deux pivots solidaires 32a, faisant ainsi grandir l'angle α qui va tendre vers 180°. Une butée peut être réalisée entre la biellette menante 22 et le pivot solidaire 32a situé à droite. A cet effet, la biellette menante 22 forme une languette 222 qui va venir en butée sur le pivot solidaire 32a après une course de l'ordre de 30° par exemple.

En ramenant ainsi le pivot libre 33 entre les deux pivots solidaires 32a, la distance entre les deux plaques de pression mobiles A grandit et les deux disques D sont ainsi libérés des plaques de pression A.

Tout comme dans le premier mode de réalisation, ce second mode de réalisation offre un effet de levier démultiplié en raison d'un angle α de grande ouverture au repos qui a tendance à se rapprocher de l'angle plat. L'action du système de déverrouillage manuel est également équilibrée et symétrique, du fait de la présence de deux sous-ensembles montés de manière symétrique et diamétralement opposée sur ce frein double.

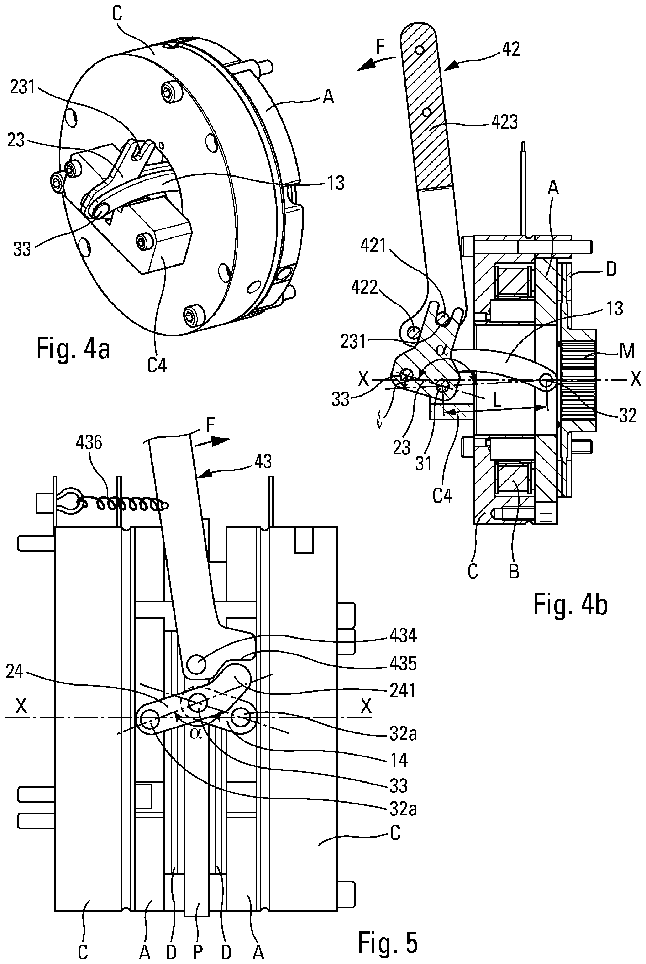

Sur les figures 4a et 4b, on peut voir un dispositif de freinage d'un arbre rotatif simple d'un type comparable à celui de la figure 1 et des figures 2a à 2d. Ce frein est équipé d'un système de déverrouillage manuel selon un troisième mode de réalisation de l'invention qui présente une configuration axiale, et non plus symétrique. En effet, ce système de déverrouillage manuel s'étend à travers le boîtier C et présente des pivots qui sont proches de l'axe X. Plus précisément, une biellette menée 13 relie un pivot solidaire 32 monté sur la plaque de pression mobile A à un pivot libre 33 positionné en dehors du frein. Cette biellette menée 13 traverse le boîtier C. Une biellette menante 23 relie le pivot libre 33 à un pivot solidaire 31 monté sur un support C4 lui-même fixé au boîtier C. On peut voir sur la figure 4b que les trois pivots 31, 32 et 33 sont situés à proximité directe de l'axe de symétrie X. Le pivot solidaire 32 est littéralement situé sur l'axe X, le pivot libre 33 est situé juste au-dessus de l'axe X et l'autre pivot solidaire 31 est situé juste en-dessous de l'axe X. On peut également noter que le pivot solidaire 31 est situé entre le pivot solidaire 32 et le pivot libre 33 et est positionné plus près du pivot libre 33 que du pivot solidaire 32. La biellette menante 23 comprend également une échancrure de raccordement 231 à laquelle peut être raccordé un levier d'actionnement manuel 42 comprenant un organe de préhension manuel 423 et deux broches 421 et 422 permettant de coopérer avec la biellette menante 23. Plus précisément, on peut voir qu'une des broches 421 vient se loger dans l'échancrure 231 et que l'autre broche 422 vient se positionner à côté de l'échancrure 231.

Là encore, l'angle α formé par les trois pivots au niveau du pivot solidaire 31 est largement ouvert, de l'ordre de 160 à 165°. De même, la distance l est très largement inférieure à la distance L : l correspondant environ au dixième de L.

Ainsi, en déplaçant le levier 42 dans le sens de la flèche F, la biellette menante 23 bascule vers la gauche et le pivot libre 33 se rapproche de l'alignement avec les deux autres pivots solidaires 31 et 32. Ceci a directement pour effet de déplacer la plaque de pression mobile A vers le boîtier C, c'est-à-dire en éloignement du disque de friction D. L'effet du levier est ici très important, car l'angle α au repos est déjà proche de 180°. On peut toujours noter que le levier d'actionnement manuel 42 est raccordé de manière amovible à la biellette menante 23.

La figure 5 représente un dispositif de freinage d'un arbre rotatif double qui est sensiblement similaire ou identique à celui des figures 3a et 3b, avec un plateau de friction P central et deux disques de friction D, deux plaques de pression mobiles A et deux boîtiers C disposées de manière symétrique par rapport au carter de support P. Le système de déverrouillage manuel comprend deux sous-ensembles disposés de manière symétrique et diamétralement opposée par rapport à l'axe de symétrie X. Chaque sous-ensemble comprend deux pivots solidaires 32a montés sur les deux plaques de pression mobiles A, une biellette menée 14 pivotant autour du pivot solidaire 32a et raccordée à une biellette menante 24 montée pivotante sur l'autre pivot solidaire 32a. Les deux biellettes 14 et 24 sont reliées entre elles par un pivot libre 33. La biellette menante 24 est prolongée par une patte d'actionnement 241 au-delà du pivot libre 33 de l'autre côté du pivot solidaire 32a, sensiblement au niveau de l'autre pivot solidaire 32 de la biellette menée 14. A nouveau, on peut remarquer que l'angle α formé par les trois pivots au niveau du pivot libre 33 est largement ouvert, de l'ordre de 150° environ. De même, la distance l séparant le pivot libre 33 de la droite passant par les deux pivots solidaires 32a est bien inférieure à la distance séparant ces deux pivots solidaires 32a : l correspondant environ au quart de L.

Dans ce quatrième mode de réalisation, le levier d'actionnement manuel 43 peut être monté à demeure sur le frein au moyen d'un pivot de levier 434 fixé sur le carter de support P, à proximité du pivot libre 33. En variante, le levier 43 peut être monté de manière amovible sur ce pivot de levier 434. Quoiqu'il en soit, le levier 43 comprend une tête d'actionnement 435 qui est destinée à venir en contact d'appui avec la patte d'actionnement 241 de la biellette menante 24, lorsque l'on déplace le levier 43 dans le sens de la flèche F. Ceci a pour effet de faire pivoter la tête d'actionnement 435 vers le bas en contact de la patte d'actionnement 241, ce qui va entraîner le pivotement de la biellette menante 24 autour de son pivot solidaire 32a. Ce faisant, le pivot libre 33 se déplace en direction de l'axe X, tendant ainsi à s'aligner avec les deux pivots solidaires 32a. L'angle α augmente alors pour tendre vers 180°. La position de butée peut être atteinte lorsque la patte d'actionnement 241 vient en butée sur le pivot solidaire 32a de droite.

Avantageusement, le levier 43 est sollicité vers sa position de repos par un ressort 436, afin de maintenir la tête d'actionnement 435 en éloignement de la patte d'actionnement 241, lorsque le dispositif de freinage d'un arbre rotatif fonctionne normalement.

Ainsi, dans ce quatrième mode de réalisation de l'invention, le pivot libre 33 est disposé de manière symétrique entre les deux pivots solidaires 32a en formant un triangle isocèle aplati. Le levier d'actionnement manuel 43 peut être fixé à demeure sur le frein ou au contraire être monté de manière amovible sur le pivot de levier 434. Le contact entre le levier 43 et la biellette menante 24 n'est réalisé que lorsque l'on actionne le levier 43.

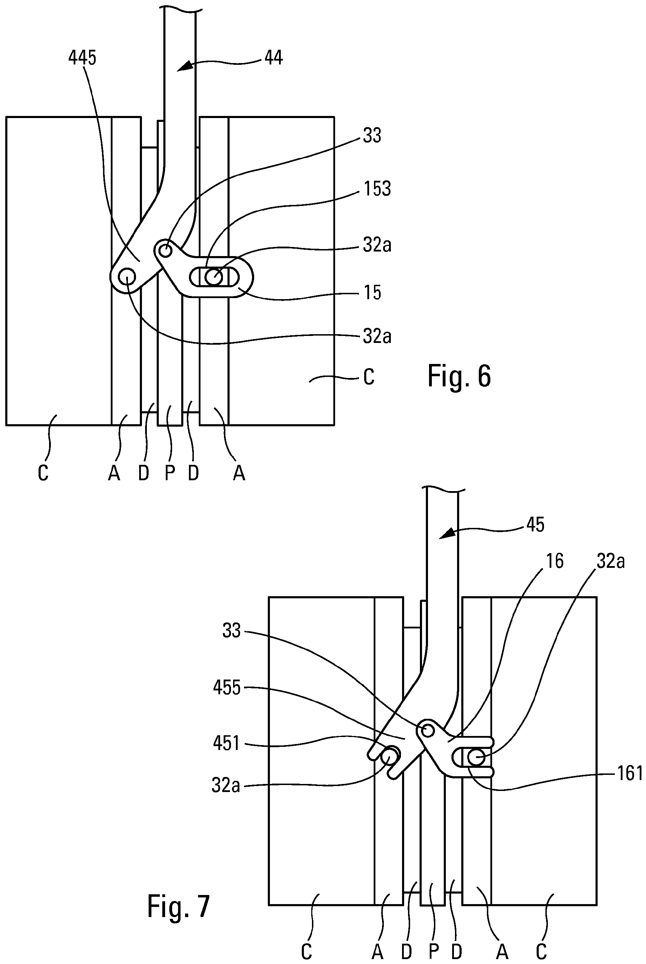

La figure 6 représente de manière très schématique un dispositif de freinage d'un arbre rotatif double du même type que celui de la figure 5. Deux pivots solidaires 32a sont respectivement montés sur les deux plaques de pression mobiles A. Une biellette menée 15 forme un logement oblong 153 dans lequel est reçu le pivot solidaire 32a. De ce fait, le pivot solidaire 32a peut se déplacer à l'intérieur de ce logement oblong 153 sans induire de déplacement de la biellette menée 15. Ceci permet au frein de fonctionner normalement sans agir sur le système de déverrouillage manuel. Cette biellette menée 15 est reliée à une biellette menante 445 par un pivot libre 33. Cette biellette 445 est montée pivotante autour d'un pivot solidaire 32a fixé à demeure sur l'autre plaque de pression mobile A. Dans ce mode de réalisation, le levier d'actionnement manuel 44 est réalisé de manière monobloc avec la biellette menante 445. Ceci est possible, étant donné que la biellette menée 15 autorise le déplacement du pivot solidaire 32a dans le logement oblong 153 sans engendrer de déplacement de la biellette 15. Par conséquent, le levier 44 peut être fixé à demeure sur le frein.

Le positionnement mutuel des trois pivots, dans ce cinquième mode de réalisation peut être sensiblement identique ou similaire à celui du quatrième mode de réalisation de la figure 5. L'angle α est toujours relativement plat, bien qu'il puisse être de l'ordre de 120°.

Sur la figure 7, on voit un sixième mode de réalisation appliqué à un dispositif de freinage d'un arbre rotatif double. La biellette menante 455 est réalisée de manière monobloc avec le levier 45, tout comme dans le mode de réalisation précédent. Toutefois, la biellette 455 forme une échancrure 451 adaptée à recevoir le pivot solidaire 32a. La biellette 455 est reliée à la biellette menée 16 par le pivot libre 33. La biellette menée 16 forme également une échancrure 161 adaptée à recevoir le pivot solidaire 32a. Ainsi, l'intégralité du système de déverrouillage manuel est amovible à l'exception des pivots solidaires 32a. En d'autres termes, le levier d'actionnement 45, les deux biellettes 16 et 455 ainsi que le pivot libre 33 constituent un outil à part entière qui peut venir en prise avec les deux pivots solidaires 32a montés à demeure sur les deux plaques de pression mobiles A du frein double.

Là encore, le positionnement mutuel des trois pivots 32a et 33 peut être sensiblement similaire ou identique à celui des quatrième et cinquième modes de réalisation des figures 5 et 6, avec un angle α largement ouvert et tendant à s'aplatir.

Dans tous les modes de réalisation qui viennent d'être décrits, le système de déverrouillage manuel agit de manière centrée et équilibrée par rapport à l'axe de symétrie X. D'autre part, l'angle α que forment les trois pivots entre eux est largement ouvert, de l'ordre de 120 à 170°, et tend à s'ouvrir encore davantage lorsque l'on actionne le levier d'actionnement. L'ouverture de cet angle α peut être stoppée avant 180° pour créer une butée instable ou au contraire dépasser les 180° pour gagner une butée stable. Le pivot libre peut être positionné entre les deux pivots solidaires, ou au contraire être positionné d'un côté ou de l'autre des deux pivots solidaires. L'actionnement du levier a toujours pour effet à tendre vers l'alignement des trois pivots.

Dans certains modes de réalisation, le levier d'actionnement est monté de manière amovible sur la biellette menante. Dans un autre mode de réalisation, le levier peut être monté de manière amovible ou non sur le frein et ne venir en contact d'appui de la biellette menante que lors de son actionnement. Dans d'autres modes de réalisation, le levier est réalisé de manière monobloc avec la biellette menante. Il est également prévu un logement de pivot oblong permettant au frein de fonctionner normalement sans déplacer la biellette menée. Enfin, il est également envisagé que l'intégralité du système de déverrouillage manuel soit amovible, à l'exception des pivots solidaires. Toutes ces caractéristiques peuvent être combinées sans sortir du cadre de la présente invention, qui est définie par les revendications.

Grâce à l'invention, on obtient un système de déverrouillage manuel avec un effet de levier considérable et de ce fait un actionnement aisé, tout en garantissant une action symétrique équilibrée et centrée par rapport à l'axe de symétrie X. Le caractère amovible (partiel ou intégral) du système de déverrouillage est également une caractéristique qui participe à l'ergonomie et à la sécurité d'utilisation.

## Revendications

1. Dispositif de freinage pour un arbre rotatif (S) comprenant au moins une unité d'actionnement (I), une plaque de pression (A), un disque de friction (D) et un carter de support (P), la plaque de pression (A) étant sollicitée, au repos, par l'unité d'actionnement (I) contre le disque de friction (D) et, lorsque l'unité d'actionnement (I) est activée, la plaque de pression (A) est déplacée vers l'unité d'actionnement (I), le dispositif de freinage d'un arbre rotatif définissant un axe de symétrie X, le dispositif de freinage comprenant également un système de déverrouillage manuel pour déplacer axialement la plaque de pression (A) en éloignement du disque de friction (D) en l'absence d'activation de l'unité d'actionnement (I), ce système de déverrouillage manuel comprenant deux pivots solidaires (31, 32; 32a), le système de déverrouillage manuel comprenant également un pivot libre (33) relié aux deux pivots solidaires (31, 32 ; 32a) par deux biellettes (11, 21 ; 12, 22 ; 13, 23 ; 14, 24 ; 15 , 445 ; 16, 455), une des deux biellettes dite biellette menante (21 ; 22 ; 23 ; 24 ; 445 ; 455) étant sollicitée en déplacement pivotant par un levier d'actionnement manuel (41 ; 42 ; 43 ; 44 ; 45), l'autre biellette dite biellette menée (11 ; 12 ; 13 ; 14 ; 15 ; 16) étant entraînée en déplacement pivotant par la biellette menante (21 ; 22 ; 23 ; 24 ; 445 ; 455),
a- le système de déverrouillage manuel agissant sur la plaque de pression (A) de manière équilibrée et centrée sur l'axe de symétrie X **caractérisé en ce que** les deux pivots solidaires (31 , 32 ; 32a) sont respectivement solidaires de deux éléments du dispositif de freinage qui sont mobiles l'un par rapport à l'autre dont au moins la plaque de pression (A) et **en ce que**
b- l'angle α formé par les trois pivots (31, 32 ; 32a, 33) au niveau du pivot placé entre les deux autres est supérieur à 120°, avantageusement supérieur à 150°, et de préférence supérieur à 170°,
c- le déplacement pivotant du levier d'actionnement manuel (41 ; 42 ; 43 ; 44 ; 45), à partir de la position de repos, tend à aligner les trois pivots (31, 32 ; 32a, 33) en augmentant l'angle α qui tend à devenir plat.

2. Dispositif de freinage selon la revendication 1, dans lequel le levier d'actionnement manuel (41 ; 42) est raccordé de manière amovible à la biellette menante (21 ; 22 ; 23).

3. Dispositif de freinage selon la revendication 1, dans lequel le levier d'actionnement manuel (45) est solidaire de la biellette menante (455), les deux biellettes (16, 455) étant en prise amovible avec les deux pivots solidaires (32a).

4. Dispositif de freinage selon la revendication 1, dans lequel le levier d'actionnement manuel (43) est monté à demeure sur le dispositif de freinage d'un arbre rotatif en pivotant autour d'un axe de levier (434), le levier d'actionnement manuel (43) sollicitant la biellette menante (24) par formation d'un contact d'appui, avantageusement à l'encontre d'un système de rappel ou de maintien (436) qui ramène ou maintient le levier d'actionnement manuel (43) vers une position de repos hors de contact de la biellette menante (24).

5. Dispositif de freinage selon la revendication 1, dans lequel une des biellettes (15) est en prise avec un pivot solidaire (32a) au moyen d'un logement de pivot oblong (153) permettant un déplacement du pivot solidaire (32a) dans le logement de pivot oblong (153) sans solliciter la biellette (15) en déplacement.

6. Dispositif de freinage selon l'une quelconque des revendications précédentes, dans lequel le système de déverrouillage manuel comprend une butée instable (31 ; 32a) pour une biellette (11 ; 13 ; 24 ; 445 ; 455) lors de son pivotement, limitant ainsi l'angle α à une valeur maximale, la butée instable étant avantageusement formée par un pivot solidaire (31 ; 32a).

7. Dispositif de freinage selon l'une quelconque des revendications précédentes, dans lequel le système de déverrouillage manuel comprend une butée stable pour une biellette lors de son pivotement, limitant ainsi l'angle α à une valeur minimale au-delà du passage à 180°, la butée en pivotement étant avantageusement formée par un pivot solidaire.

8. Dispositif de freinage selon l'une quelconque des revendications précédentes, dans lequel le système de déverrouillage manuel comprend deux ensembles comprenant chacun deux pivots solidaires (31, 32; 32a) et un pivot libre (33), les ensembles étant disposés de manière symétrique par rapport à l'axe de symétrie X, le levier d'actionnement manuel (41 ; 43 ; 44 ; 45) comprenant un étrier (411) s'étendant respectivement jusqu'aux deux ensembles et une tige de préhension (413) fixée à l'étrier (411).

9. Dispositif de freinage selon l'une quelconque des revendications précédentes, dans lequel le pivot libre (33) est sensiblement équidistant des deux pivots solidaires (32a), les deux pivots solidaires (32a) étant éloignés, au repos, d'une distance L, le pivot libre (33) étant alors distant de la ligne passant par les deux pivots solidaires (32a) d'une distance minimale l qui est inférieure L/2, avantageusement inférieure à L/4 et de préférence inférieure à L/10.

10. Dispositif de freinage selon l'une quelconque des revendications précédentes, dans lequel la biellette menée (11 ; 12 ; 13 ; 14 ; 15 ; 16) comprend deux bras de biellette parallèles, la biellette menante (21 ; 22 ; 23 ; 24 ; 445 ; 455) étant disposée entre les deux bras de biellette parallèles.

11. Dispositif de freinage selon l'une quelconque des revendications précédentes, dans lequel l'unité d'actionnement (I) est de type électromagnétique comprenant un bobinage (B) monté dans un boîtier (C) de l'unité d'actionnement (I) et pouvant déplacer axialement la plaque de pression (A) pour libérer le disque de friction (D).

12. Dispositif de freinage selon l'une quelconque des revendications précédentes, dans lequel la plaque de pression (A) est pressée contre le disque de friction (D) par au moins un ressort de compression (R) monté précontraint dans un boîtier (C) de l'unité d'actionnement.

13. Dispositif de freinage selon l'une quelconque des revendications 1 à 10, dans lequel l'unité d'actionnement est du type à commande pneumatique ou hydraulique.

14. Dispositif de freinage selon l'une quelconque des revendications précédentes, dans lequel le boîtier de l'unité d'actionnement est en forme de cylindre ou de parallélépipède rectangle.

## Patentansprüche

1. Bremsvorrichtung für eine rotierende Welle (S), enthaltend zumindest eine Betätigungseinheit (I), eine Anpressplatte (A), eine Reibscheibe (D) und ein Traggehäuse (P), wobei die Anpressplatte (A) im Ruhezustand von der Betätigungseinheit (I) gegen die Reibscheibe (D) beaufschlagt wird und bei Aktivierung der Betätigungseinheit (I) die Anpressplatte (A) zur Betätigungseinheit (I) hin verlagert wird, wobei die Bremsvorrichtung für eine rotierende Welle eine Symmetrieachse X definiert, wobei die Bremsvorrichtung ferner ein manuelles Entriegelungssystem enthält, um die Anpressplatte (A) bei ausbleibender Aktivierung der Betätigungseinheit (I) axial von der Reibscheibe (D) weg zu verlagern, wobei dieses manuelle Entriegelungssystem zwei feste Drehzapfen (31, 32; 32a) enthält, wobei das manuelle Entriegelungssystem ferner einen freien Drehzapfen (33) enthält, der über zwei Schwenkarme (11, 21; 12, 22; 13, 23; 14, 24; 15, 445; 16, 455) mit den beiden festen Drehzapfen (31, 32; 32a) verbunden ist, wobei einer der beiden Schwenkarme, Antriebsschwenkarm (21; 22; 23; 24; 445; 455) genannt, über einen Handbetätigungshebel (41; 42; 43; 44; 45) zu einer Schwenkbewegung beaufschlagt wird und der andere Schwenkarm, Abtriebsschwenkarm (11; 12; 13; 14; 15; 16) genannt, über den Antriebsschwenkarm (21; 22; 23; 24; 445; 455) zu einer Schwenkbewegung angetrieben wird, wobei:
a- das manuelle Entriegelungssystem in ausgeglichener und auf die Symmetrieachse X zentrierte Weise auf die Anpressplatte (A) einwirkt, **dadurch gekennzeichnet, dass** die beiden festen Drehzapfen (31, 32; 32a) mit zwei jeweiligen, zueinander beweglichen Elementen der Bremsvorrichtung, darunter zumindest die Anpressplatte (A), fest verbunden sind, und dass
b- der Winkel α, den die drei Drehzapfen (31, 32; 32a, 33) im Bereich des zwischen den beiden anderen angeordneten Drehzapfens einschließen, größer als 120°, vorteilhafterweise größer als 150° und vorzugsweise größer als 170° ist,
c- die Schwenkbewegung des Handbetätigungshebels (41; 42; 43; 44; 45) aus der Ruhestellung dazu bestrebt ist, die drei Drehzapfen (31, 32; 32a, 33) durch Vergrößerung des Winkels α auszurichten, der dazu bestrebt ist, abzuflachen.

2. Bremsvorrichtung nach Anspruch 1, wobei der Handbetätigungshebel (41; 42) lösbar mit dem Antriebsschwenkarm (21; 22; 23) verbunden ist.

3. Bremsvorrichtung nach Anspruch 1, wobei der Handbetätigungshebel (45) fest mit dem Antriebsschwenkarm (455) verbunden ist, wobei die beiden Schwenkarme (16, 455) lösbar mit den beiden festen Drehzapfen (32a) in Eingriff stehen.

4. Bremsvorrichtung nach Anspruch 1, wobei der Handbetätigungshebel (43) um eine Hebelachse (434) verschwenkbar dauerhaft an der Bremsvorrichtung für eine rotierende Welle gelagert ist, wobei der Handbetätigungshebel (43) den Antriebsschwenkarm (24) durch Bilden eines Anlagekontakt vorteilhaft entgegen eines Rückstell- oder Haltesystems (436) beaufschlagt, das den Handbetätigungshebel (43) in eine Ruhestellung außer Kontakt mit dem Antriebsschwenkarm (24) zurückführt oder hält.

5. Bremsvorrichtung nach Anspruch 1, wobei einer der Schwenkarme (15) mit einem festen Drehzapfen (32a) mittels einer länglichen Drehzapfenaufnahme (153) in Eingriff steht, die eine Verlagerung des festen Drehzapfens (32a) in der länglichen Drehzapfenaufnahme (153) ohne verlagernde Beaufschlagung des Schwenkarms (15) ermöglicht.

6. Bremsvorrichtung nach einem der vorhergehenden Ansprüche, wobei das manuelle Entriegelungssystem einen instabilen Anschlag (31; 32a) für einen Schwenkarm (11; 13; 24; 445; 455) bei dessen Verschwenkung aufweist, wodurch der Winkel α auf einen Maximalwert begrenzt wird, wobei der instabile Anschlag vorteilhaft aus einem festen Drehzapfen (31; 32a) gebildet ist.

7. Bremsvorrichtung nach einem der vorhergehenden Ansprüche, wobei das manuelle Entriegelungssystem einen stabilen Anschlag für einen Schwenkarm bei dessen Verschwenkung aufweist, wodurch der Winkel α auf einen Minimalwert über den 180°-Übergang hinaus begrenzt wird, wobei der Schwenkanschlag vorteilhaft aus einem festen Drehzapfen gebildet ist.

8. Bremsvorrichtung nach einem der vorhergehenden Ansprüche, wobei das manuelle Entriegelungssystem zwei Anordnungen enthält, die jeweils zwei feste Drehzapfen (31, 32; 32a) und einen freien Drehzapfen (33) enthalten, wobei die Anordnungen symmetrisch in Bezug auf die Symmetrieachse X angeordnet sind, wobei der Handbetätigungshebel (41; 43; 44; 45) einen Bügel (411) aufweist, der bis zu den beiden jeweiligen Anordnungen reicht, sowie eine am Bügel (411) befestigte Greifstange (413).

9. Bremsvorrichtung nach einem der vorhergehenden Ansprüche, wobei der freie Drehzapfen (33) im Wesentlichen abstandsgleich zu den beiden festen Drehzapfen (32a) vorgesehen ist, wobei die beiden festen Drehzapfen (32a) im Ruhezustand um einen Abstand L beabstandet sind, wobei der freie Drehzapfen (33) dann von der durch die beiden festen Drehzapfen (32a) verlaufenden Linie um einen Mindestabstand I entfernt liegt, der kleiner als L/2, vorteilhafterweise kleiner als L/4 und vorzugsweise kleiner als L/10 ist.

10. Bremsvorrichtung nach einem der vorhergehenden Ansprüche, wobei der Abtriebsschwenkarm (11; 12; 13; 14; 15; 16) zwei parallel verlaufende Schwenkarmlenker enthält, wobei der Antriebsschwenkarm (21; 22; 23; 24; 445; 455) zwischen den beiden parallel verlaufenden Schwenkarmlenkern angeordnet ist.

11. Bremsvorrichtung nach einem der vorhergehenden Ansprüche, wobei die Betätigungseinheit (I) elektromagnetisch ausgebildet ist und eine Spule (B) enthält, die in einem Gehäuse (C) der Betätigungseinheit (I) gelagert ist und die Anpressplatte (A) axial verlagern kann, um die Reibscheibe (D) freizugeben.

12. Bremsvorrichtung nach einem der vorhergehenden Ansprüche, wobei die Anpressplatte (A) über zumindest eine in einem Gehäuse (C) der Betätigungseinheit vorgespannt gelagerte Druckfeder (R) gegen die Reibscheibe (D) gedrückt wird.

13. Bremsvorrichtung nach einem der Ansprüche 1 bis 10, wobei die Betätigungseinheit vom pneumatisch oder hydraulisch betätigten Typ ist.

14. Bremsvorrichtung nach einem der vorhergehenden Ansprüche, wobei das Gehäuse der Betätigungseinheit die Form eines Zylinders oder rechtwinkligen Quaders aufweist.

## Claims

1. Braking device for a rotary shaft (S) comprising at least one actuating unit (I), a pressure plate (A), a friction disc (D) and a mounting flange (P), the pressure plate (A) being biased, at rest, by the actuating unit (I), against the friction disc (D) and, when the actuating unit (I) is activated, the pressure plate (A) is moved towards the actuating unit (I), the braking device for a rotary shaft defining an axis of symmetry X, the braking device also comprising a manual unlocking system for axially moving the pressure plate (A) away from the friction disc (D) in the absence of activation of the actuating unit (I), this manual unlocking system comprising two fixed pivots (31, 32; 32a), the manual unlocking system also comprising a free pivot (33) linked to the two fixed pivots (31, 32; 32a) by two tie members (11, 21; 12, 22; 13, 23; 14, 24; 15 , 445; 16, 455), one of the two tie members referred to as leading tie member (21; 22; 23; 24; 445; 455) being biased to move pivotally by a manually actuated lever (41; 42; 43; 44; 45), the other tie member referred to as led tie member (11; 12; 13; 14; 15; 16) being driven to move pivotally by the leading tie member (21; 22; 23; 24; 445; 455),
a- the manual unlocking system acting on the pressure plate (A) in a manner that is balanced and centered on the axis of symmetry X **characterized in that** the two fixed pivots (31, 32; 32a) are respectively fixed to two members of the braking device which are movable in relation to each other one of which is the pressure plate (A) and **in that**
b- the angle α formed by the three pivots (31, 32; 32a, 33) at the pivot placed between the two others is greater than 120°, advantageously greater than 150°, and preferably greater than 170°,
c- the pivotal movement of the manually actuated lever (41; 42; 43; 44; 45), starting from the resting position, tends to align the three pivots (31, 32; 32a, 33) by increasing the angle α which tends to become flat.

2. Braking device according to claim 1, in which the manually actuated lever (41; 42) is removably connected to the leading tie member (21; 22; 23).

3. Braking device according to claim 1, in which the manually actuated lever (45) is fixed in relation to the leading tie member (455), the two tie members (16, 455) being removably engaged with the two fixed pivots (32a).

4. Braking device according to claim 1, in which the manually actuated lever (43) is permanently mounted on the braking device of a rotary shaft while pivoting around a lever axle (434), the manually actuated lever (43) biasing the leading tie member (24) by forming a bearing contact, advantageously against a return or holding system (436) which brings the manually actuated lever (43) towards or holds it at a resting position out of contact with the leading tie member (24).

5. Braking device according to claim 1, in which one of the tie members (15) is engaged with a fixed pivot (32a) by means of an oblong pivot accommodation (153) enabling movement of the fixed pivot (32a) within the oblong pivot accommodation (153) without biasing the tie member (15) to move.

6. Braking device according to any one of the preceding claims, in which the manual unlocking system comprises an unstable stop (31; 32a) for a tie member (11; 13; 24; 445; 455) in course of its pivoting, thereby limiting the angle α to a maximum value, the unstable stop being advantageously formed by a fixed pivot (31; 32a).

7. Braking device according to any one of the preceding claims, in which the manual unlocking system comprises a stable stop for a tie member in course of its pivoting, thereby limiting the angle α to a minimum value beyond the passage to 180°, the pivot stop being advantageously formed by a fixed pivot.

8. Braking device according to any one of the preceding claims, in which the manual unlocking system comprises two assemblies each comprising two fixed pivots (31, 32; 32a) and one free pivot (33), the assemblies being disposed symmetrically relative to the axis of symmetry X, the manually actuated lever (41; 43; 44; 45) comprising a clevis (411) extending respectively to the two assemblies and a shank (413) for grasping fastened to the clevis (411).

9. Braking device according to any one of the preceding claims, in which the free pivot (33) is substantially equidistant from the two fixed pivots (32a), the two fixed pivots (32a) being, at rest, at a distance L away from each other, the free pivot (33) then being away from the line passing through the two fixed pivots (32a) by a minimum distance I which is less than L/2, advantageously less than L/4 and preferably less than L/10.

10. Braking device according to any one of the preceding claims, in which the led tie member (11; 12; 13; 14; 15; 16) comprises two parallel tie member arms, the leading tie member (21; 22; 23; 24; 445; 455) being disposed between the two parallel tie member arms.

11. Braking device according to any one of the preceding claims, in which the actuating unit (I) is of electromagnetic type comprising a coil (B) mounted in a casing (C) of the actuating unit (I) and able to move the pressure plate (A) axially to release the friction disc (D).

12. Braking device according to any one of the preceding claims, in which the pressure plate (A) is pressed against the friction disc (D) by at least one compression spring (R) mounted pre-stressed in a casing (C) of the actuating unit.

13. Braking device according to any one of claims 1 to 10, in which the actuating unit is of the pneumatic or hydraulic actuation type.

14. Braking device according to any one of the preceding claims, in which the casing of the actuating unit is of cylindrical or rectangular parallelepiped shape.
